# EUROPÄISCHE PATENTSCHRIFT

(11) **EP 3 733 534 B1**
(45) Veröffentlichungstag und Bekanntmachung des Hinweises auf die Patenterteilung: **15.09.2021**
(21) Anmeldenummer: 20175272.2
(22) Anmeldetag: 21.12.2016
(51) Int. Cl.: B65B 11/50, B65B 9/13, B65B 11/58

(54) **VERFAHREN ZUR MANIPULATIONSSICHEREN VERSIEGLUNG VON PACKGUT**
METHOD FOR TAMPER-PROOF SEALING OF PACKAGED GOODS
PROCÉDÉ DE SCELLAGE PROTÉGÉ CONTRE LES MANIPULATIONS DE PRODUITS EMBALLÉS

(30) Priorität: 22.12.2015 DE 102015122597
(43) Veröffentlichungstag der Anmeldung: 04.11.2020
(62) Teilanmeldung aus: 16816697.3
(73) Patentinhaber: Gebr. Heinemann SE & Co. KG, 20457 Hamburg (DE)
(72) Erfinder: Koch, Thomas André, 22941 Bargteheide (DE)
(74) Vertreter: Patentanwälte Olbricht Buchhold Keulertz

(56) Entgegenhaltungen:
- EP-A1- 0 249 534
- EP-A1- 1 445 197
- DE-A1- 1 922 180
- DE-A1- 3 521 416
- GB-A- 1 025 034
- US-A1- 2011 268 371

## Beschreibung

Gegenstand der Erfindung ist ein Verfahren zur manipulationssicheren Versiegelung von Packgut auf einer Palette, bei dem eine Folienhaube über das Packgut gezogen wird und mit einer Bodenfolie verschweißt wird.

Beim Transport von Waren, welche für sicherheitssensible Bereiche bestimmt sind, muss sichergestellt werden, dass diese den Empfänger erreichen, ohne dass sie manipuliert worden sind. Hierfür kommt eine Reihe von Sicherheitsmaßnahmen zum Einsatz. Neben Maßnahmen, welche Diebstahl und Manipulationen vermeiden sollen, ist die Versiegelung der Fracht eine Kernmaßnahme, sodass Manipulationen und Manipulationsversuche durch den Warenempfänger erkannt werden können.

Logistikprozesse, welche die Luftsicherheit beeinflussen können (u.a. Lagerung, Verpackung, Transport, Umschlag, Anlieferung und Übergabe insbesondere von Luftfracht, Flughafenlieferungen und Bordvorräten), können zur Vermeidung von Röntgen- oder alternativen Frachtkontrollen vor Verbringung der Fracht in Sicherheitsbereiche (z.B. Flughafensicherheitsbereiche), nach Maßgabe des Konzeptes der Sicheren Lieferkette gestaltet werden. Voraussetzung für eine behördliche Genehmigung des Verfahrens auf Basis der einschlägigen nationalen und internationalen Bestimmungen ist die betriebliche Implementierung und regelmäßige Validierung von Sicherheitsmechanismen, welche ein ausreichend hohes Sicherheitsniveau über die gesamte Lieferkette - beginnend beim Versender, über eingesetzte Spediteure und Sub-Unternehmer bis hin zum Warenempfänger- gewährleisten. Diese Maßnahmen erstrecken sich über die Anlagen-, Fracht- und Personalsicherheit.

Die US 2010/0037563 A1 beschreibt eine Verpackung für Transportgüter auf Paletten, die temperaturempfindlich sind. Die thermoisolierende Verpackung besteht aus einem Oberteil und einem Unterteil, die die Palette einschließlich der darauf gestapelten Transportgüter umschließen. Der obere Teil und der untere Teil werden durch verkleben, heften oder die Verwendung von Klebeband miteinander verbunden. Die Verpackung wird insbesondere für die Verladung von Gütern auf Flughäfen verwendet, damit die verpackten Waren im Transit gekühlt oder gegen Temperaturveränderungen geschützt sind. Die Transportgüter sind bei dieser Verpackung jedoch Manipulationen zugänglich, da einfach beispielsweise das Klebeband gelöst und anschließend erneut verwendet werden kann, ohne dass dieses von außen erkennbar ist.

DE 1 922 180 A beschreibt das Verpacken von Stückgut auf einer Palette. Es erfolgt ein Verschweißen der Folien, um eine wasserdichte Verbindung zu erreichen und das Packgut vor Wasser zu schützen. Die Verbindung zwischen Bodenabdeckung und Stapelabdeckung kann durch Kleben oder Siegeln erfolgen. Das Versiegeln erfolgt bevorzugt mit einer Heißluftbeaufschlagung.

US 2011/0268371 A1 offenbart manipulationssichere Umschläge und Versandbeutel für den Post- oder Kurierversand, besonders den sicheren Postversand von Dokumenten, Geldscheinen oder kleineren vertraulichen Gegenständen. Hierzu wird eine Zange aus einem Heiz- und Schmelzelement und einem Presselement zum Erstellen der konturierten Naht eingesetzt. Die Folien werden zwischen die Zangenhälften gelegt, wobei die eine Zangenfläche Erhebungen, z.B. in Form von Prismen 54 oder Fingern 72 (Fig. 7) und die andere Zangenhälfte kongruente Öffnungen 60 aufweist, die zur Aufnahme der Erhebungen dienen. Durch Zusammendrücken der Zange werden die Folien von den Erhebungen in die Öffnungen gedrückt und die Folien des Umschlags verschweißt.

Aufgabe der Erfindung ist es daher ein Verfahren bereitzustellen, mit dem Packgut für sicherheitssensible Bereiche manipulationssicher verpackt werden kann, so dass der Empfänger Manipulationen und Manipulationsversuche erkennen kann und in die Lage versetzt wird, ggf. geeignete Kontrollmaßnahmen einleiten zu können. Insbesondere für den Transport von Luftfracht, Bordvorräten und Flughafenlieferungen im Rahmen von sicheren Lieferketten soll dieses Verfahren geeignet sein. Das Verfahren soll außerdem die Automatisierung des Verpackungs- und Versiegelungsprozesses ermöglichen.

Die Aufgabe wird erfindungsgemäß gelöst durch ein Verfahren zur manipulationssicheren Versieglung von Packgut auf einer Palette gemäß Patentanspruch 1.

Das erfindungsgemäße Verfahren umfasst die folgenden Schritte:
a. Positionieren einer Bodenfolie, bevorzugt einer Boden-Folienhaube, auf einer Palette,
b. Positionieren von Packgut auf der Bodenfolie, die auf der Palette liegt,
c. Aufziehen einer Folienhaube über das Packgut, so dass die Bodenfolie und die Folienhaube vollumfänglich überlappen und eine Überlappungsfläche bilden,
d. Positionieren der Palette in einer Schweißanlage,
e. Verschweißen der Folien im Bereich der Überlappungsfläche von Folienhaube und Bodenfolie auf Höhe der Palette, wobei im Überlappungsbereich von Folienhaube und Bodenfolie eine konturierte Schweißnaht aufgebracht wird, wobei das Schweißverfahren die Schritte umfasst:
   e1. Aufheizen eines Heizstempels mit einer konturierten Stempelfläche, wobei der Heizstempel ein gerader Heizstempel mit einer geraden Stempelfläche in Form einer Platte ist,
   e2. Pressen des aufgeheizten Heizstempels gegen die Folien im Bereich der Überlappungsfläche von Folienhaube und Bodenfolie auf Höhe der Palette und Verschweißen von Bodenfolie und Folienhaube miteinander, wobei im Überlappungsbereich von Folienhaube und Bodenfolie eine konturierte Schweißnaht entsteht und die Überlappungsfläche der Folien vollumfänglich ist, so dass das Packgut vollständig von Folie umgeben ist und an der Überlappungsfläche die Bodenfolie und die Haubenfolie vollumfänglich verschweißt werden.

Weitere Ausführungsformen sind Gegenstand der Unteransprüche oder nachfolgend beschrieben.

Die Palette ist erfindungsgemäß bevorzugt eine Europoolpalette. Eine Europoolpalette ist eine Palette nach EN 13698-1 und EPAL (European Pallet Association e.V.) und verfügt über eine längere Längsseite mit 1200 mm Länge und eine kürzere Breitseite mit 800 mm Länge. Die Europoolpaletten weisen in Richtung der Breitseite kurze Bretter auf, auf denen in Richtung der Längsseite längere Bretter in der Höhe versetzt aufliegen. Der Versatz entspricht dabei der Dicke der Bretter. Anstelle einer Palette können auch andere Unterlagen wie z.B. Transportplatten oder Transportkisten verwendet werden, die hier aber als Palette bezeichnet werden. Optional können die Ecken der Palette mit einem Kantenschutz versehen werden, um bei der Stauung auf der Ladefläche einen Abstand z.B. von 5-25 mm zwischen den Paletten zu schaffen und so Schäden an der Folie bzw. der Schweißnaht durch Reibung zu vermeiden. Die Palette ist optional eine EUR-2/3-Industriepalette. Die Palette besteht beispielsweise aus Holz oder Kunststoff. Erfindungsgemäß werden sowohl Einwegpaletten als auch Mehrwegpaletten eingesetzt.

Neben dem bevorzugten Schweißen mit Heizelementen, können die Kunststofffolien auch z.B. mit Ultraschall oder Laserstrahlen erhitzen und dann mit einem konturierten Stempel verpresst werden.

Bei dem erfindungsgemäßen Verfahren erfolgen die Schweißvorgänge jeweils paarweise, wobei immer die einander gegenüberliegenden Seiten gleichzeitig verschweißt werden. Die einander gegenüberliegenden Ecken werden entweder auch gleichzeitig verschweißt oder die Verschweißung der Ecken erfolgt einzeln oder seitenweise.

In einer Ausführungsform wird die Palette, die mit dem auf der Bodenfolie platzierten Packgut beladen ist, im Schritt d. auf einem Drehteller platziert, bevorzugt manuell oder per Förderstreckenanbindung. Das Verschweißen der Folien in einem Schritt f. erfolgt bei Verwendung eines Drehtellers bevorzugt in mehreren Schritten.

Bevorzugt sind die Schritte zum Verschweißen gemäß Schritt f. die folgenden:
f1. Drehen der Palette auf dem Drehteller um 90°,
f2. Verschweißen der Folien auf beiden Breitseiten der Palette, wobei ein oder mehrere gerade Heizstempel auf der gesamten Breite der Palette gegen die überlappenden Folien gedrückt werden,
f3. Drehen der Palette auf dem Drehteller um 90° zurück in die Ausgangsposition,
f4. Verschweißen der Folien auf beiden Längsseiten der Palette, wobei auf beiden Längsseiten der Palette ein oder mehrere gerade Heizstempel auf der gesamten Länge der Palette gegen die überlappenden Folien gedrückt werden,
f5. Verschweißen der Folien an den 4 Ecken der Palette, wobei ein oder mehrere runde Heizstempel an den Ecken der Palette gegen die Folien gedrückt werden.

Alternativ können auch die Schritte f2. und f4. miteinander vertauscht werden, so dass jeweils zuerst die Längsseiten und dann die Breitseiten miteinander verschweißt werden. Wenn zuerst die Längsseiten miteinander verschweißt werden, erfolgt Schritt f1. nach Schritt f4. Alternativ kann die Verschweißung der Ecken gemäß Schritt f5 auch parallel zur Verschweißung von Längs- und Breitseiten gem. Schritt f2 und f4 erfolgen.

Das Verschweißen der Bodenfolie mit der Folienhaube im Bereich der Überlappungsfläche der Folien umfasst in einer Ausführungsform die Schritte:
- Ausfahren des Heizstempels aus einer Ausgangsposition,
- Aufheizen des Heizstempels,
- Andrücken des Heizstempels an die Folien im Bereich der Überlappungsfläche, und
- Zurückfahren des Heizstempels in die Ausgangsposition,
wobei der Heizstempel bevorzugt pneumatisch, z.B. mit einem Pneumatikzylinder betrieben wird. Alternativ erfolgt zunächst das Andrücken des Heizstempels an die Folien im Bereich der Überlappungsfläche und dann erst das Aufheizen des Heizstempels. Die Endlagenerkennung der Anpresszylinder der Heizstempel erfolgt bevorzugt über Drückschalter, Reed-Kontakte oder Initiatoren. Die Anpresskraft der Heizstempel ist bevorzugt elektronisch einstellbar.

Im erfindungsgemäßen Verfahren wird ein Heizstempel verwendet, der eine konturierte Stempelfläche hat. Die Stempelfläche weist bevorzugt eine Kontur in Form eines Logos, eines Symbols, eines oder mehrerer Buchstaben oder eines Schriftzugs oder eines beliebigen Musters auf. Durch die Konturierung der Stempelfläche entsteht eine Schweißnaht mit einer eindeutigen und wieder erkennbaren Kontur. Die Schweißnaht weist dabei die gleiche Kontur wie die konturierte Stempelfläche auf, d.h. die konturierte Schweißnaht hat bevorzugt die Kontur in Form eines Logos, eines Symbols, eines oder mehrerer Buchstaben, eines Musters oder eines Schriftzugs. Bei einer Variante werden hierfür die Fräsungen auf der Stempelfläche (Schweißfläche) in z.B. Logo-, Symbol-, Muster-, Buchstaben- oder Schriftzugform nicht beheizt, sodass sich aus der umliegenden beheizten Fläche die Schweißverbindung ergibt. Bei einer weiteren Variante wird die gesamte Stempelfläche beheizt, sodass sich eine durchgängige Schweißverbindung ergibt. Bei einer weiteren Variante werden nur die Fräsungen auf der Stempelfläche (Schweißfläche) in z.B. Logo-, Symbol-Muster-, Buchstaben- oder Schriftzugform beheizt, sodass sich eine Schweißverbindung in Form der Kontur ergibt.

Unter einem geraden Heizstempel wird erfindungsgemäß ein Heizstempel mit einer geraden Stempelfläche, d.h. einer Stempelfläche, deren Grundfläche sich in einer Ebene erstreckt, in Form einer Platte verstanden. Die Kontur erstreckt sich als Erhebung/Fräsung über die Grundfläche hinaus. Ein runder Heizstempel weist eine gebogene Stempelfläche zum Beispiel in Form eines Kreisabschnitts auf. Die Heizstempel sind bevorzugt mit einer Beschichtung überzogen, um das Ankleben der Folie zu verhindern. Alternativ zur Beschichtung kann der Schweißbalken mit einer Antihaftfolie ummantelt sein.

Der Heizstempel ist bevorzugt gelenkig, damit dieser sich dem Untergrund anpassen kann. Der Anpressdruck ist sehr wichtig und hat Einfluss auf die Schweißzeit.

Die Heizstempel werden bevorzugt auf 90 - 200°C, bevorzugt 120 - 150 °C. Die Aufheizung der Heizstempel erfolgt bevorzugt mit je mindestens einer Heizpatrone pro Heizstempel. Bevorzugt werden die Heizstempel für eine Schweißzeit von 1-60 Sek, bevorzugt 3 bis 30 Sek, gegen die Folien gedrückt.

Die Bodenfolie und/oder die Folienhaube sind bevorzugt eine markierte Folie. Die Markierungen sind beispielweise firmenspezifische Logos, Symbole, Buchstaben, Zahlen und/oder Muster, wie beispielsweise sogenannte Guilloche-Muster, welche ein zusätzliches manipulationserschwerendes Merkmal darstellen. Eine beschädigte Folie und somit ein potenzieller Manipulationsversuch und damit zusammenhängend eine beschädigte Struktur des Folienmusterdruckes kann nicht oder nur mit sehr großem Aufwand ohne Bruch der Musterstruktur repariert werden. Die verwendete Folienhaube ist bevorzugt mit einem Logo, Symbolen, einem Muster oder einer Marke o.ä. markiert. Die Folienhaube kann transparent, opak, farbig oder farblos sein. Die Folienstärke kann variieren. Die Bodenfolie ist ebenfalls bevorzugt mit einem Logo, Symbolen, einem Muster oder einer Marke o.ä. markiert. Auch die Bodenfolie kann transparent, opak, farbig oder farblos sein. Die Folienstärke kann variieren. Die Bodenfolie hat bevorzugt zzgl. zum Europoolpalettenformat (1200 mm x 800 mm) einen Überstand von 20 bis 60 mm an allen vier Seiten, welcher nach unten abfällt, um eine Überlappungsfläche mit der Folienhaube für den Schweißvorgang zu schaffen. Der Folienüberstand fällt entweder schwerkrafts- bzw. beschaffenheitsbedingt nach unten ab oder wird händisch oder mittels technischer Verfahren vorab in Form gebracht. Beispielsweise kann eine Stretchfolie als Bodenfolie verwendet und um die Palette gestrecht werden, damit die Bodenfolie eng an der Palette anliegt und keine flatternden Folienenden vorhanden sind, die bei einer automatischen Verarbeitung stören könnten.

In einer Ausführungsform erfolgt beim erfindungsgemäßen Verfahren ein weiterer Schritt g., in dem
g. die Schweißnähte gekühlt werden

Durch das Kühlen wird sichergestellt, dass zum einen die Schweißnaht ausgehärtet ist und zum anderen keine Verletzungsgefahr durch heißes Folienmaterial mehr besteht. Die Kühlung erfolgt bevorzugt mit Lüftern oder Ventilatoren, wobei die Lüfter oder Ventilatoren auf Höhe der Schweißnaht, bevorzugt auf beiden Seiten der Palette angeordnet sind.

Der weitere Schritt g. erfolgt, in dem entweder
g1. in einer zweiten Station mit mindestens einem Lüfter und/oder Ventilator die Schweißnähte (8) gekühlt werden oder
g2. in der Schweißstation mit mindestens einem Lüfter und/oder Ventilator die Schweißnähte (8) gekühlt werden.

In einer Ausführungsform erfolgt die Anbringung eines Schutzbandes zum Schutz der Schweißnaht. Das Schutzband wird horizontal auf Höhe der Schweißnaht und umlaufend entlang der Schweißnaht angebracht, bevorzugt erfolgt die Anbringung mindestens eines Kunststoffflachbands. Ziel der Bänderung ist der Schutz der Schweißnaht vor transport- und warenumschlagsbedingten Einflüssen. Das Schutzband hat nur eine Schutzfilmfunktion und wird vom Warenempfänger entfernt, bevor die Integrität der Palette und insbesondere der Schweißnaht begutachtet wird.

In einer weiteren Ausführungsform wird zusätzlich oder ersatzweise zum optionalen horizontalen Schutzband eine einfache oder mehrfache Vertikalumreifung auf der Längs- oder Stirnseite der Palette oder Längs- und Stirnseite durchgeführt. Der Zweck der Vertikalumreifung ist die Fixierung des Packgutes auf der unterliegenden Palette sowie die Erhöhung der Stabilität der Packeinheit, um den transporttypischen Belastungen unbeschadet standhalten zu können.

Das Verfahren erfolgt bevorzugt in einer vollautomatischen Anlage mit mindestens einer Station, besonders bevorzugt in einer Anlage mit 2 oder 3 Stationen. Eine Anlage mit 2 bzw. 3 Stationen weist bevorzugt eine Bereitstellungsstation (Station 1) und eine kombinierte Schweiß- und Kühlstation (Station 2) oder eine Schweißstation (Station 2) und eine separate Kühlstation (Station 3) auf.

Beim erfindungsgemäßen Verfahren steht das Packgut auf einer Palette und zwischen der Palette und dem Packgut ist eine Bodenfolie, bevorzugt eine Boden-Folienhaube aufgelegt. Über dem Packgut wird eine zweite größere Folienhaube so aufgezogen, dass beide Folien eine Überlappungsfläche bilden. Die Überlappungsfläche der Folien ist vollumfänglich, d.h. die Folien überlappen entlang aller vier Seiten der Palette im Bereich der Palette, also entlang des gesamten Palettenumfangs, so dass das Packgut vollständig von Folie umgeben ist und kein Zugriff auf das Packgut ohne Beschädigung der Folie erfolgen kann. An der Überlappungsfläche der Folien werden Boden- und Haubenfolie vollumfänglich verschweißt. Durch diese durchgehende Schweißnaht ist ein Öffnen der Folie ohne deren Beschädigung nicht möglich und es wird somit eine Versiegelung des Packguts sichergestellt. Die Schweißkontur ist umlaufend und schwer zu reproduzieren, um eine Manipulation des Packguts auszuschließen. Diese durchgehende Versiegelung mit konturierter Schweißnaht kann durch reine optische Kontrolle überprüft werden. Mit dem erfindungsgemäßen Verfahren ist daher eine automatisierte und manipulationssichere Verpackung und Versiegelung von Packgut möglich.

In einer Ausführung des Verfahrens fährt eine Europoolpalette mit Packgut, welches mit einer Folienhaube überzogen ist, auf einer Förderstrecke in eine vollautomatische Verschweiß- und Versiegelungsmaschine ein. Das Packgut steht auf einer Bodenfolie und Folienhaube und Bodenfolie überlappen vollumfänglich. In der Anlage ist ein Drehteller, welcher eine 90° Drehung oder 180 ° Drehung der Palette ermöglicht. Im ersten Arbeitsschritt wird die Palette um 90° gedreht, um die Folien auf der 800 mm langen Breitseite der Palette verschweißen zu können. Nach der Drehung erfolgt der zweite Arbeitsschritt, indem die geraden Heizstempel, bevorzugt mittels eines Pneumatikzylinders auf der Höhe des durchgehenden Bretts der Palette an die überlappenden Folien angedrückt werden, so dass die Folien zwischen Stempelfläche und Brett zusammengedrückt und verschweißt werden.

Die geraden Heizstempel sind bevorzugt 200 mm lang. Die Heizstempel werden bevorzugt mit je 2 Heizpatronen aufgeheizt. Nach einer einstellbaren Schweißzeit von ca. 5 Sekunden werden die Heizstempel wieder in die Ausgangsstellung zurückgefahren. Es wurden beispielsweise bei 170°C und ca. 5 sec. Andrückzeit der Heizstempel sowie ca. 25N Druck sehr gute Verschweißungen erzielt. Die zu verschweißten Folien waren nach Abkühlung fest verbunden.

Danach erfolgt ein weiterer Arbeitsschritt, in dem der Drehtisch die Palette in Grundstellung zurückdreht. Nun beginnt der nächste Arbeitsschritt, das Verschweißen der Längsseiten. Hier werden die Heizstempel erneut über Pneumatikzylinder an die Folie auf Höhe des durchgehenden Bretts angedrückt, wobei die Folien zwischen Stempelfläche platt gedrückt werden. Nach weiteren 5 Sekunden Schweißzeit fahren die Heizstempel wieder in die Ausgangsstellung zurück. Nun erfolgt der letzte Arbeitsschritt, der auf dem Drehteller stattfindet, das Verschweißen der Ecken an der Palette. Jede Europoolpalette hat 45° Schrägen an den Ecken, diese gilt es auch zu verschweißen. Das erfolgt über vier Heizstempel, die rund sind. Diese werden auch 45°Grad schräg angedrückt, z.B. mit derselben Schweißzeit wie bei den geraden Stempeln. Danach verlässt die Palette den Drehtisch und fährt in die nächste Station.

Bei der Ausführungsform mit kombinierter Schweiß- und Kühlstation wird während des Schweißens durch den Heizstempel somit die umliegende Folie außerhalb des Schweißbereichs gekühlt, nach dem Schweißvorgang wird die geschweißte und die umliegende Folie gekühlt.

Sowohl an der Einfahrt als auch an der Ausfahrt der vollautomatischen Anlage ist optional ein sogenanntes "Muting" System installiert. Das schaltet die gesamte Anlage ab, sobald eine Person versucht, über die Förderstrecke die Anlage zu betreten. Durch die kurzen Schweißzeiten beträgt bei dieser Ausführungsform die Dauer eines Zyklus bevorzugt weniger als 60 Sekunden pro Palette. Die Geschwindigkeiten des Zyklus sind anpassbar an die in einer bestehenden Anlage vorhandene Fördertechnik, wobei der Standard 0,3m/s beträgt.

Das erfindungsgemäße Verfahren wird bevorzugt mit einer Vorrichtung durchgeführt. Diese Vorrichtung weist bevorzugt mindestens einen geraden Heizstempel und mindestens einen runden Heizstempel auf. Die Heizstempel sind bevorzugt paarweise angeordneten. In einer bevorzugten Ausführungsform weist die verwendete Vorrichtung 12 bis 20 gerade Heizstempel und 4 runde Heizstempel auf, wobei die Heizstempel bevorzugt paarweise einander gegenüberliegenden angeordnet sind, d.h. dass bevorzugt je 6 gerade Heizstempel auf einer Seite der Vorrichtung angeordnet sind.

Weiterhin weist die verwendete Vorrichtung bevorzugt mindestens eine Heizpatrone zum Aufheizen eines Heizstempels auf. Eine Heizpatrone ist jeweils mit mindestens einem Heizstempel verbunden, besonders bevorzugt ist jeder Heizstempel mit zwei Heizpatronen verbunden. Die verwendete Vorrichtung weist bevorzugt mindestens einen Pneumatikzylinder auf, der mit einem Heizstempel gekoppelt ist. Durch den Pneumatikzylinder wird der Heizstempel aus einer Ausgangsposition (Ruhposition) in eine Andruckposition an der Folie, in der der Schweißvorgang erfolgt, und wieder zurückbewegt.

In einer Ausführungsform weist die verwendete Vorrichtung eine Kühlstation mit Lüftern und/oder Ventilatoren oder anderen Kühlvorrichtungen auf. In der Kühlstation wird die Schweißnaht der Folie nach dem Schweißen oder parallel zu Schweißen abgekühlt.

In einer weiteren Ausführungsform weist die verwendete Vorrichtung eine mit der Schweißstation kombinierte Kühlstation auf. In der Kühlstation wird die Schweißnaht der Folie parallel zum Schweißen abgekühlt. Die Kühlstation ist in dieser Ausführungsform mit der Schweißstation kombiniert und bildet mit dieser räumlich eine Einheit.

Gegebenenfalls weist die Vorrichtung eine Bereitstellungsstation auf, in der die Palette mit dem Packgut, das auf einer Bodenfolie steht und mit einer Folienhaube von oben bedeckt ist, für den Schweißvorgang bereitgestellt wird. Die Kühlstation und die Bereitstellungsstation sind in einer Ausführungsform räumlich von der Schweißstation getrennt und die Schweißstation, die Kühlstation und ggf. die Bereitstellungsstation sind über eine Förderstrecke miteinander verbunden, die die Palette mit Packgut aus der Bereitstellungsstation in die Schweißstation und anschließend in die Kühlstation befördert.

Bevorzugt weist die verwendete Vorrichtung ein Muting-System auf, dass die Vorrichtung abschaltet, sobald eine Person versucht, über die Förderstrecke die Vorrichtung zu betreten. Bevorzugt ist die Vorrichtung komplett verkleidet, so dass ein Zugriff ebenfalls schwierig ist.

Die verwendete Vorrichtung ist bevorzugt ein Vollautomat und kann somit in eine Förderanlage von verschiedenen Herstellern integriert werden.

Das erfindungsgemäße Verfahren erlaubt es eine manipulationssichere Verpackung für Packgut auf Paletten bereitzustellen. Der Warenempfänger und sonstige Akteure in der Transportkette, wie z.B. Spediteure, Behörden, Kontrollkräfte an Flughäfen können durch die konturierte Schweißnaht und die vollständige Einschließung des Packguts in die Folie die Integrität der Sendung bei der Warenannahme beurteilen. Durch eine 360°-Prüfung der Folie insbesondere der horizontalen, konturierten Schweißnaht auf Palettenhöhe können Manipulationen und Manipulationsversuche, wie Entnahme, Einbringen oder Austausch von Gegenständen, erkannt werden und die Palette in Verdachtsmomenten einer gesonderten Prüfung zugeführt werden.

Für das erfindungsgemäße Verfahren ist ein breites Einsatzgebiet vorgesehen. Die Verpackung des Packguts kann allgemein aus Diebstahlpräventionsgründen bzw. als Mittel der Beweisführung durch Eingrenzung von Diebstahlzeitpunkten und Lokalisierung im Rahmen von Schnittstellenkontrollen genutzt werden. Insbesondere werden das erfindungsgemäß Verfahren und die verwendete Vorrichtung für die Belieferung von sensiblen Kunden, die z.B. in Flughafensicherheitsbereichen ansässig sind oder z.B. Diplomaten oder Militär verwendet. Es ist auch ein Einsatz für die Belieferung in sensiblen Märkten, z.B. in Krisengebiete möglich. Das erfindungsgemäß Verfahren und die verwendete Vorrichtung können auch zur Verpackung von Packgut, das auf besonders schutzbedürftigen Verkehrsträgern, wie z.B. Flugzeugen oder Seeschiffen transportiert wird, zum Einsatz kommen.

Ein bevorzugter Einsatzbereich für das erfindungsgemäße Verfahren ist der Bereich der Luftfracht. Dabei ist das Verfahren sowohl für Lieferungen in die Sicherheitsbereiche von Flughäfen am Boden, als auch für die Bereitstellung von Bordvorräten geeignet. Einen weiteren bevorzugten Einsatzbereich für das erfindungsgemäße Verfahren stellt die Seeschifffahrt dar.

Die Erfindung wird anhand der Figuren beispielhaft erläutert. Es zeigen
- Figur 1: eine Vorrichtung zur Durchführung des erfindungsgemäßen Verfahrens mit Schweißstation, Kühlstation und Bereitstellungsstation,
- Figur 2: einen Heizstempel zu Durchführung des erfindungsgemäßen Verfahrens oder zur Verwendung in der Vorrichtung und
- Figur 3: schematisch eine Palette mit Packgut.

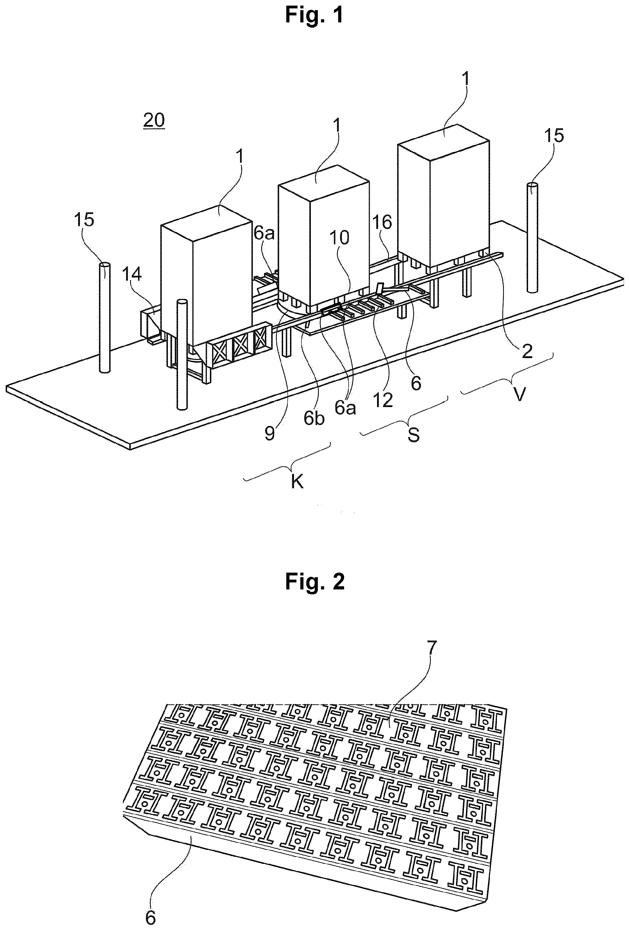

Figur 1 zeigt eine Vorrichtung 20 mit Bereitstellungsstation V, Schweißstation S und Kühlstation K. Die Stationen sind über eine Förderstrecke F miteinander verbunden. Die gesamte Vorrichtung 20 ist durch ein Muting-System 15 geschützt. In der Bereitstellungsstation V befindet sich eine Palette 2 mit Packgut 1. Das Packgut 1 ist zur Palette hin mit einer Bodenfolie und nach oben mit einer Folienhaube bedeckt (nicht dargestellt). In der benachbarten Schweißstation befindet sich eine zweite Palette 2 mit Packgut 1. In der Schweißstation S sind auf beiden Seiten der Palette 2 mehrerer Heizstempel angeordnet. Es ist erkennbar, dass die Heizstempel 6 jeweils paarweise angeordnet sind. Auf der Längsseite 10 der Palette sind mehrere gerade Heizstempel 6a erkennbar, während an den Ecken mehrerer runde Heizstempel 6b erkennbar sind. Die Heizstempel sind jeweils mit einem Pneumatikzylinder 12 verbunden. Die Palette 2 steht auf einem Drehteller 9, der auf der Unterseite eine Hubvorrichtung aufweist. In der separaten Kühlstation K befindet sich eine 3. Palette 2 mit Packgut 1. Die Kühlstation weist mehrere Ventilatoren 14 auf, die an beiden Seiten der Palette 2 einander gegenüberliegend angeordnet sind.

Figur 2 zeigt einen Heizstempel 6, wie er für das erfindungsgemäße Verfahren verwendet wird. Es ist deutlich die konturierte Stempelfläche 7 erkennbar, die hier eine Fräsung mit mehreren Reihen eines Logos aufweist

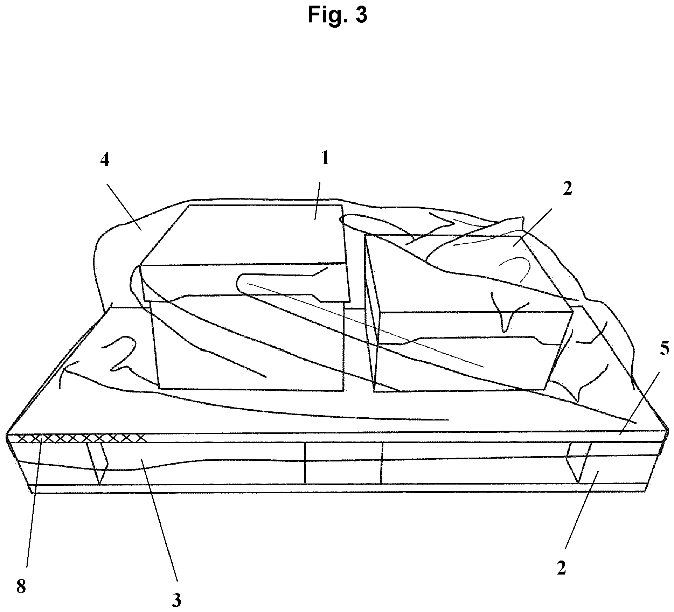

Figur 3 zeigt schematisch eine Palette 2 mit Packgut 1, das auf einer Bodenfolie 3 steht und von oben mit einer Folienhaube 4 bedeckt ist. Es ist erkennbar, dass Bodenfolie 3 und Folienhaube 4 überlappen. Die Folien sind bereits teilweise mit einer konturierten Schweißnaht 8 verbunden.

**Bezugszeichenliste**

| | |
|---|---|
| Packgut | 1 |
| Palette | 2 |
| Bodenfolie | 3 |
| Folienhaube | 4 |
| Überlappungsfläche | 5 |
| Heizstempel | 6 |
| konturierte Stempelfläche | 7 |
| konturierte Schweißnaht | 8 |
| Drehteller | 9 |
| Längsseite der Palette | 10 |
| Breitseite der Palette | 11 |
| Pneumatikzylinder | 12 |
| Heizpatrone | 13 |
| Lüfter/Ventilator | 14 |
| Mutingsystem | 15 |
| Förderstrecke | 16 |
| Vorrichtung | 20 |
| Länge | L |
| Breite | B |
| Ecke | E |
| Schweißstation | S |
| Kühlstation | K |
| Vorstation | V |

## Patentansprüche

1. Verfahren zur manipulationssicheren Versieglung von Packgut (1) auf einer Palette (2), wobei das Verfahren die folgenden Schritte umfasst:
a. Positionieren einer Bodenfolie (3) auf einer Palette (2),
b. Positionieren von Packgut (1) auf der Bodenfolie (3), die auf der Palette (2) liegt,
c. Aufziehen einer Folienhaube (4) über das Packgut, so dass die Bodenfolie (3) und die Folienhaube (4) vollumfänglich überlappen und eine Überlappungsfläche (5) bilden,
d. Positionieren der Palette (2) in einer Schweißanlage,
e. Verschweißen der Folien (3, 4) im Bereich der Überlappungsfläche (5) von Folienhaube und Bodenfolie auf Höhe der Palette (2), wobei im Überlappungsbereich (5) von Folienhaube und Bodenfolie eine konturierte Schweißnaht (8) aufgebracht wird,
wobei das Schweißverfahren gemäß Schritt e. die Schritte umfasst:
e1. Aufheizen eines Heizstempels (6), mit einer konturierten Stempelfläche (7), wobei der Heizstempel ein gerader Heizstempel mit einer geraden Stempelfläche in der Form einer Platte ist,
e2. Pressen des Heizstempels (6) gegen die Folien im Überlappungsbereich (5) von Folienhaube (4) und Bodenfolie (3) auf Höhe der Palette (2) und Verschweißen von Bodenfolie (3) und Folienhaube (4) miteinander, wobei im Überlappungsbereich (5) von Folienhaube und Bodenfolie eine konturierte Schweißnaht (8) entsteht und die Überlappungsfläche der Folien vollumfänglich ist, so dass das Packgut vollständig von Folie umgeben ist und an der Überlappungsfläche die Bodenfolie und die Haubenfolie vollumfänglich verschweißt werden,
wobei die Schweißvorgänge jeweils paarweise erfolgen und immer die einander gegenüberliegenden Seiten gleichzeitig verschweißt werden und dass die Heizstempel auf der Höhe des durchgehenden Bretts der Palette an die überlappenden Folien angedrückt werden, so dass die Folien zwischen Stempelfläche und Brett zusammengedrückt und verschweißt werden.

2. Verfahren gemäß Patentanspruch 1, **dadurch gekennzeichnet, dass** das Verschweißen der Folien (3,4) die Schritte
• Ausfahren des Heizstempels (6) aus einer Ausgangsposition,
• Aufheizen des Heizstempels (6),
• Andrücken des Heizstempels (6) an die Folien (3,4), und
• Zurückfahren des Heizstempels (6) in eine Ausgangsposition, umfasst, wobei der Heizstempel (6) bevorzugt pneumatisch betrieben wird.

3. Verfahren gemäß einem der vorhergehenden Patentansprüche **dadurch gekennzeichnet, dass** das Verfahren in einer automatischen Anlage mit mindestens einer Station erfolgt.

4. Verfahren gemäß einem der vorhergehenden Patentansprüche **dadurch gekennzeichnet, dass** die Heizstempel (6) mit je mindestens einer Heizpatronen auf 90 - 200°C aufgeheizt werden und bevorzugt für eine Schweißzeit von 1-60 Sek gegen die Folien (3,4) gedrückt werden.

5. Verfahren gemäß einem der vorhergehenden Patentansprüche **dadurch gekennzeichnet, dass** die Bodenfolie (3) und/oder die Folienhaube (4) eine markierte Folie sind, bevorzugt mit einem Muster, Logos, Symbolen, Marken oder einer Mischung hiervon markiert.

6. Verfahren gemäß einem der vorhergehenden Patentansprüche **dadurch gekennzeichnet, dass** der Heizstempel eine Kontur in Form eines Logos, eines Symbols, eines oder mehrerer Buchstaben, eines Musters oder eines Schriftzugs aufweist.

## Claims

1. Method for tamper-proof sealing of packaged goods (1) on a pallet (2), the method comprising the following steps:
a. positioning a bottom film (3) on a pallet (2),
b. positioning packaged goods (1) on the bottom film (3) lying on the pallet (2),
c. drawing a film cover (4) over the packaged goods such that the bottom film (3) and the film cover (4) overlap over the entire periphery and form an overlapping surface (5),
d. positioning the pallet (2) in a welding system,
e. welding the films (3, 4) in the region of the overlapping surface (5) of the film cover and the bottom film at the level of the pallet (2), wherein a contoured weld seam (8) is applied in the overlapping region (5) of the film cover and the bottom film,
wherein the welding method according to step e comprises the steps of:
e1. heating a heating die (6) having a contoured die surface (7), the heating die being a straight heating die having a straight die surface in the form of a plate,
e2. pressing the heating die (6) against the films in the overlapping region (5) of the film hood (4) and the bottom film (3) at the level of the pallet (2) and welding the bottom film (3) and the film cover (4) together, wherein, in the overlapping region (5) of the film cover and bottom film, a contoured weld seam (8) is created and the overlapping region of the films is completely peripheral, such that the packaged goods are completely surrounded by film and the bottom film and the cover film are welded over the entire periphery at the overlapping surface,
wherein the welding processes are carried out in pairs and the mutually opposite sides are always welded at the same time, and the heating dies are pressed against the overlapping films at the level of the continuous board of the pallet, such that the films are pressed together and welded between the die surface and the board.

2. Method according to claim 1, **characterized in that** welding the films (3, 4) comprises the steps of:
• moving the heating die (6) out of a starting position,
• heating up the heating die (6),
• pressing the heating die (6) against the films (3, 4), and
• moving the heating die (6) back into a starting position,
wherein the heating die (6) is preferably operated pneumatically.

3. Method according to any of the preceding claims, **characterized in that** the method takes place in an automatic system having at least one station.

4. Method according to any of the preceding claims, **characterized in that** the heating dies (6) are each heated to 90-200°C by means of at least one heating cartridge in each case and are preferably pressed against the films (3, 4) for a welding time of 1-60 seconds.

5. Method according to any of the preceding claims, **characterized in that** the bottom film (3) and/or the film cover (4) is a marked film, preferably marked with a pattern, logos, symbols, brands or a mixture thereof.

6. Method according to any of the preceding claims, **characterized in that** the heating die has a contour in the form of a logo, a symbol, one or more letters, a pattern or writing.

## Revendications

1. Procédé de scellage protégé contre les manipulations des marchandises emballées (1) sur une palette (2), dans lequel le procédé comprend les étapes suivantes :
a. le positionnement d'un film de fond (3) sur une palette (2),
b. le positionnement des marchandises emballées (1) sur le film de fond (3) reposant sur la palette (2),
c. le hissage d'une housse de film (4) au-dessus des marchandises emballées de telle sorte que le film de fond (3) et la housse de film (4) se chevauchent entièrement et forment une surface de chevauchement (5),
d. le positionnement de la palette (2) dans une installation de soudage,
e. le soudage des films (3, 4) dans la zone de la surface de chevauchement (5) de la housse de film et du film de fond à la hauteur de la palette (2), dans lequel un cordon de soudure (8) profilé est appliqué dans la zone de chevauchement (5) de la housse de film et du film de fond,
dans lequel le procédé de soudage selon l'étape e. comprend les étapes suivantes :
e1. le chauffage d'un tampon chauffant (6), comportant une surface de tampon (7) profilée, dans lequel le tampon chauffant est un tampon chauffant rectiligne comportant une surface de tampon rectiligne en forme de plaque,
e2. le pressage du tampon chauffant (6) contre les films dans la zone de chevauchement (5) de la housse de film (4) et du film de fond (3) à la hauteur de la palette (2) et le soudage du film de fond (3) et de la housse de film (4) l'un à l'autre, dans lequel un cordon de soudure (8) profilé est créé dans la zone de chevauchement (5) de la housse de film et du film de fond et la surface de chevauchement des films est entière de telle sorte que les marchandises emballées sont entièrement entourées par le film et le film de fond et le film de housse sont entièrement soudés au niveau de la surface de chevauchement,
dans lequel les opérations de soudage sont respectivement effectuées par paires et les côtés opposés l'un à l'autre sont toujours soudés en même temps et les tampons chauffants sont pressés contre les films se chevauchant à la hauteur du panneau continu de la palette de telle sorte que les films sont pressés ensemble et soudés entre la surface de tampon et le panneau.

2. Procédé selon la revendication 1, **caractérisé en ce que** le soudage des films (3, 4) comprend les étapes suivantes
• la sortie du tampon chauffant (6) depuis une position de départ,
• le chauffage du tampon chauffant (6),
• le pressage du tampon chauffant (6) sur les films (3, 4), et
• la remise du tampon chauffant (6) à une position de départ,
dans lequel le tampon chauffant (6) est de préférence actionné pneumatiquement.

3. Procédé selon l'une quelconque des revendications précédentes, **caractérisé en ce que** le procédé est effectué dans une installation automatique comportant au moins une station.

4. Procédé selon l'une quelconque des revendications précédentes, **caractérisé en ce que** les tampons chauffants (6) sont chauffés à 90-200 °C à l'aide d'au moins une cartouche chauffante et, de préférence, sont pressés contre les films (3, 4) pendant un temps de soudage de 1 à 60 secondes.

5. Procédé selon l'une quelconque des revendications précédentes, **caractérisé en ce que** le film de fond (3) et/ou la housse de film (4) sont un film marqué, de préférence marqué d'un motif, d'un logo, d'un symbole, d'une marque ou d'un mélange de ceux-ci.

6. Procédé selon l'une quelconque des revendications précédentes, **caractérisé en ce que** le tampon chauffant comporte un contour sous la forme d'un logo, d'un symbole, d'au moins une lettre, d'un motif ou d'une inscription.
